# EUROPÄISCHE PATENTSCHRIFT

(11) **EP 3 811 474 B1**
(45) Veröffentlichungstag und Bekanntmachung des Hinweises auf die Patenterteilung: **15.11.2023**
(21) Anmeldenummer: 19723100.4
(22) Anmeldetag: 09.05.2019
(51) Int. Cl.: H01T 13/54, H01T 13/46, H01T 13/32

(54) **VORKAMMER-ZÜNDKERZE MIT SYMMETRISCH ANGEORDNETEN MASSEELEKTRODEN AN DER GEHÄUSEINNENSEITE**
PRE-CHAMBER SPARK PLUG HAVING SYMMETRICALLY ARRANGED GROUND ELECTRODES ON THE INTERIOR OF THE HOUSING
BOUGIE D'ALLUMAGE DE CHAMBRE DE PRÉCOMBUSTION MUNIE D'ÉLECTRODES DE MASSE DISPOSÉES SYMÉTRIQUEMENT SUR LE CÔTÉ INTÉRIEUR DE BOÎTIER

(30) Priorität: 20.06.2018 DE 102018209970
(43) Veröffentlichungstag der Anmeldung: 28.04.2021
(73) Patentinhaber: Robert Bosch GmbH, 70442 Stuttgart (DE)
(72) Erfinder: STOCKMEIER, Ulrich, 75323 Bad Wildbad (DE); BLANKMEISTER, Matthias, 42579 Heiligenhaus (DE)
(86) Internationale Anmeldenummer: PCT/EP2019/061930
(87) Internationale Veröffentlichungsnummer: WO 2019/242930

(56) Entgegenhaltungen:
- WO-A1-01/50017
- DE-A1- 10 144 976
- DE-A1- 19 961 769
- DE-A1-102014 004 943
- US-A- 2 120 492
- US-A1- 2011 062 850
- US-A1- 2012 240 890

## Beschreibung

### Stand der Technik

Die Erfindung betrifft eine Vorkammer-Zündkerze gemäß des Anspruchs 1 aus. Insbesondere ist die erfindungsgemäße Vorkammer-Zündkerze für die Anwendung bei mobilen Anwendungen im Automotivbereich geeignet, wie beispielsweise beim PKW oder LKW, die einen Benzinmotor oder einen Gasmotor aufweisen.

Bisher erfolgt bei mobilen Fahrzeugen, wie z.B. PKW oder LKW, die Entflammung des Kraftstoffs, beispielsweise Benzin oder Gas, im Motor mit einer konventionellen Zündkerze. Es gibt konventionelle Zündkerzen mit unterschiedlichsten Ausgestaltungen der Masseelektrode, wie beispielsweise als Seitenelektrode oder als Dachelektrode. Bei konventionellen Zündkerzen findet die Entflammung des Kraftstoffes sehr lokal an einem Ort statt (lokale Zündung).

Eine Vorkammer-Zündkerze unterscheidet sich primär von einer konventionellen Zündkerze dadurch, dass die Vorkammer-Zündkerze an dem brennraumseitigen Gehäuseende eine Kappe hat, wodurch eine Vorkammer ausgebildet wird, in der eine erste Entflammung des Kraftstoff-Luft-Gemisches an den Elektroden erfolgt. Die Flammen können durch Öffnungen in der Kappe in den Hauptbrennraum des Motors gelangen und entzünden dort ausgehend von mehreren Punkten das restliche Kraftstoff-Luft-Gemisch (zweite Entflammung). Durch diese zweite Entflammung gleichzeitig an mehreren Orten in der Hauptbrennkammer, auch Raum-Zündung genannt, können Vorkammer-Zündkerzen wesentlich magere Kraftstoff-LuftGemische als konventionelle Zündkerzen entflammen. Auch deshalb sind Vorkammer-Zündkerzen seit Jahren bei stationären Industrie Gasmotoren im Serieneinsatz. Des Weiteren zeigen Vorkammer-Zündkerzen aufgrund der Raumzündung im Vergleich zu konventionellen Zündkerzen auch Vorteile bei der Effizienz und einer vollständigeren sowie schnelleren Verbrennung im Motor. Das Raumzündungskonzept erlaubt einen stabileren Betrieb des Motors in Richtung des thermodynamischen Optimums in der Volllast.

Solche bei stationären Industrie Gasmotoren benutzten Vorkammer-Zündkerzen sind beispielsweise aus der DE 38 21 688 und der DE 29 16 285 bekannt.

Bisher gibt es keine Vorkammer-Zündkerze, die eine gute Performance, d.h. zuverlässige Entflammung und gute Entflammungsstabilität des Kraftstoff-Luft-Gemisches, auch bei unterschiedlichen Lastpunkten des Motors liefert. Das Lastprofil des Motors eines mobilen Fahrzeugs ist instationär und reicht von Leerlauf über Teillast bis hin zu Volllast. Für die Anwendung einer Vorkammer-Zündkerze im Automotivbereich, z.B. bei PKW oder LKW, ist es notwendig, dass die Vorkammer-Zündkerze nicht nur bei Volllast eine gute Performance, sondern auch bei anderen Lastpunkten hat.

Somit liegt der vorliegenden Erfindung die Aufgabe zugrunde eine Vorkammer-Zündkerze bereit zu stellen, die auch bei verschiedenen Lastpunkten eine gute Entflammung und eine gute Entflammungsstabilität des Kraftstoff-Luft-Gemisches aufweist.

Die DE 10 2014 004943, US 2012/240890 und WO 01/50017 zeigen eine Vorkammer-Zündkerze gemäß dem Oberbegriff.

### Vorteil der Erfindung/ Offenbarung der Erfindung

Diese Aufgabe wird bei der erfindungsgemäßen Vorkammer-Zündkerze der eingangs genannten Art durch die Merkmale des Anspruchs 1 gelöst.

Die erfindungsgemäße Vorkammer-Zündkerze weist ein Gehäuse mit einer Bohrung entlang seiner Längsachse auf. Aufgrund der Bohrung hat das Gehäuse eine Innenseite und eine Außenseite. Eine Kappe ist an dem brennraumseitigen Ende des Gehäuses am Gehäuse angeordnet und befestigt. Die Kappe bildet zusammen mit dem Gehäuse eine Vorkammer aus. Innerhalb des Gehäuses ist ein Isolator angeordnet. Der Isolator weist eine Bohrung entlang seiner Längsachse auf. Innerhalb des Isolators ist eine Mittelelektrode angeordnet. Das brennraumseitige Ende der Mittelelektrode ragt aus dem Isolator heraus. Zusammen mit jeder der Masseelektroden bildet die Mittelelektrode jeweils einen Zündspalt aus, wobei die mindestens zwei Massenelektroden an der Innenseite des Gehäuses angeordnet sind. Es ergeben sich verschiedene technische Wirkungen. Dadurch, dass die mindestens zwei Masseelektroden innerhalb des Gehäuses angeordnet sind, ergibt sich eine wesentlich größere Freiheit für die Ausgestaltung der Kappe, so dass das Volumen der Vorkammer für eine größere Spanne von Lastpunkten optimiert werden kann. Somit ergibt sich dann eine gute Entflammung und eine gute Entflammungsstabilität für verschiedene Lastpunkte des Motors.

Eine weitere technische Wirkung ist, dass durch die Erhöhung der Anzahl der Masseelektroden die Zündkerze eine höhere Lebensdauer hat.

Dadurch, dass die mindestens zwei Masseelektroden innerhalb des Gehäuses angeordnet sind und zusammen mit der Mittelelektrode jeweils einen Zündspalt bilden, ergibt sich des Weiteren, dass der Isolator und die Mittelelektrode ebenfalls vom Gehäuse umgeben sind, so dass das den Isolator und den Isolatorfuß umgebene Gehäuse den Isolatorfuß vor den irregulären Druckspitzen schützt, wodurch Isolatorfußbrüche vermieden werden.

Weitere vorteilhafte Ausgestaltungen der Erfindung sind Gegenstand der Unteransprüche. Bei einer besonders vorteilhaften Ausgestaltung der Erfindung sind die mindestens zwei Masseelektroden symmetrisch an der Innenseite des Gehäuses angeordnet sind. Dabei ist die Längsachse der Zündkerze die Symmetrieachse bei der Anordnung der Masseelektroden. Aufgrund der symmetrischen Anordnung der Masseelektroden ergibt sich der technische Effekt, dass die Strömung des Kraftstoff-Luft-Gemisches innerhalb der Vorkammer sehr gleichmäßig erfolgt, wodurch eine gute Entflammung und eine gute Entflammungsstabilität des Kraftstoff-Lift-Gemisches in der Vorkammer-Zündkerze weiter begünstigt wird. Des Weiteren erfolgt durch diese Symmetrie auch das "Herausschießen" der Flammen aus der Vorkammer in den Brennraum des Motors symmetrisch, wodurch ein gleichzeitiges Zünden (Entflammen) des Kraftstoff-Luft-Gemisches im Brennraume an verschiedenen Orten ermöglicht wird.

Gemäß der Erfindung weist das Gehäuse in seiner Gehäusewand mindestens zwei Bohrungen auf, in die jeweils eine der mindestens zwei Masseelektroden eingesteckt und befestigt sind. Beispielsweise sind die mindestens zwei Masseelektroden in den Bohrungen verschweißt oder verpresst. Die Anordnung der Masseelektroden in den Bohrungen hat den Vorteil, dass sich das Herstellungsverfahren für die erfindungsgemäße Vorkammer-Zündkerze sich vereinfacht und somit günstiger wird.

Die Bohrungen sind erfindungsgemäß im Bereich eines auf der Außenseite des Gehäuses ausgebildeten Gewindes ausgebildet.

Das Gewinde auf der Außenseite des Gehäuses dient zum Einschrauben der Vorkammer-Zündkerzen in einem Zylinderkopf.

Bei einer weiteren Ausgestaltung der Erfindung weist das Gehäuse auf seiner Außenseite mindestens zwei Vertiefungen auf, in den die mindestens zwei Bohrung ausgebildet sind. Dies hat den Vorteil, dass es einfacher ist die Bohrungen im Bereich des Gewindes in der Gehäusewand auszubilden. Vorteilhafterweise ist beispielsweise der Außendurchmesser des Gehäuses bei den Vertiefungen kleiner als ein Kerndurchmesser des Gewindes, das an der Außenseite des Gehäuses ausgebildet ist. Dies hat den Vorteil, dass die Bohrungen und die Vertiefungen beim Einschrauben der Zündkerze in einen Zylinderkopf nicht stören.

Beispielsweise können die mindestens zwei Vertiefungen als eine Nut, insbesondere eine runde Nut oder eine konische Nut, oder eine ebene Fläche im Bereich des Gewindes ausgebildet sein.

Bei einer weiteren vorteilhaften Ausgestaltung der erfindungsgemäßen Zündkerze weist diese 4 oder 6 Masseelektroden auf, die symmetrisch an der Innenseite des Gehäuses angeordnet sind. Dadurch wird zum einen die Lebensdauer der Zündkerze erhöht und zum anderen ergibt sich eine noch gleichmäßigere Verteilung der Strömung des Kraftstoff-Luft-Gemisches für eine gute Entflammung und gute Entflammungsstabilität bei verschiedenen Lastpunkten des Motors.

Bei einer Weiterbildung der Erfindung ist vorgesehen, dass die Vorkammer eine hintere Vorkammer und eine vordere Vorkammer hat, wobei ein Volumen der hinteren Vorkammer mindestens 1/4 des gesamten Volumens der Vorkammer beträgt. Dadurch wird auch bei niedrigen Lastpunkten sichergestellt, dass sich im Bereich des Zündortes ein zündfähiges Kraftstoff-Luft-Gemisch vorfindet.

Die Gehäuse- und die Kappen-Innengeometrie bestimmen zusammen mit dem Isolator das Vorkammervolumen. Die Vorkammer und ihr Volumen lassen sich dabei in eine vordere Vorkammer und eine hintere Vorkammer unterteilen. Der Grenze zwischen der vorderen Vorkammer und hinteren Vorkammer wird durch die Position der Masseelektrode bestimmt, d.h. die vordere Vorkammer erstreckt sich von der Kappe bis zu einer Ebene, die auf Höhe der Masseelektrode senkrecht zur der Längsachse X des Gehäuses verläuft. Entsprechend erstreckt sich die hintere Vorkammer von dieser Ebene bis zum Gehäuse-Sitz. Zur Berechnung der Volumina werden die Konturen der Räume berücksichtigt.

### Zeichnung

Figur 1 zeigt ein Beispiel für eine erfindungsgemäße Vorkammer-Zündkerze
Figur 2 zeigt einen Blick in die Zündkerze aus Richtung des Brennraums
Figur 3 zeigt einen Ausschnitt des Gewindebereichs des Gehäuses

### Beschreibung des Ausführungsbeispiels

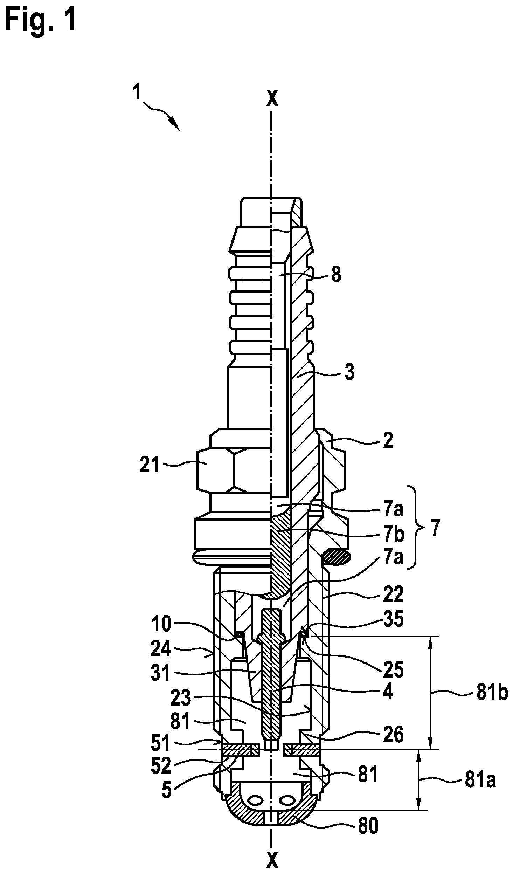

Figur 1 zeigt in einer halb geschnittenen Ansicht eine Zündkerze 1. Die Zündkerze 1 umfasst ein Gehäuse 2. In das Gehäuse 2 ist ein Isolator 3 eingesetzt. Das Gehäuse 2 und der Isolator 3 weisen jeweils entlang ihrer Längsachse eine Bohrung auf. Das Gehäuse hat eine Außenseite 24 und eine Innenseite 23. Die Längsachse des Gehäuses 2, die Längsachse X des Isolators 3 und die Längsachse der Zündkerze 1 fallen zusammen. In den Isolator 3 ist eine Mittelelektrode 4 eingesetzt. Des Weiteren erstreckt sich in den Isolator 3 ein Anschlussbolzen 8 zur elektrische Kontaktierung der Zündkerze, über diese wird die Zündkerze 1 mit einer Spannungsquelle elektrisch kontaktiert. Die elektrische Kontaktierung bildet das Brennraum-abgewandte Ende der Zündkerze 1. Die elektrische Kontaktierung kann einstückig, wie in diesem Beispiel, oder auch aus mehreren Komponenten ausgebildet sein.

Der Isolator 3 wird typischerweise in drei Bereich unterteilt: Isolatorfuß 31, Isolatorkörper und Isolatorkopf. Die drei Bereiche unterscheiden sich beispielsweise durch unterschiedliche Durchmesser. Der Isolatorfuß 31 ist das Brennraum-zugewandte Ende des Isolators 3. Innerhalb des Isolatorfußes 31 ist die Mittelelektrode 4 angeordnet. Der Isolatorfuß 31 ist hier vollständig innerhalb des Gehäuses 2 angeordnet. In der Regel hat der Isolatorfuß 31 den kleinsten Außendurchmesser am Isolator 3.

Angrenzend an den Isolatorfuß 31 ist der Isolatorkörper angeordnet, der in der Regel vollständig vom Gehäuse 2 umfasst ist. Der Isolatorkörper hat einen größeren Außendurchmesser als der Isolatorfuß 31. Der Übergang zwischen Isolatorfuß 31 und Isolatorkörper ist als Schulter oder Kehle ausgebildet. Dieser Übergang wird auch als Fußkehle oder Isolatorsitz 35 bezeichnet.

Der Isolatorkopf grenzt am Brennraum-abgewandten Ende des Isolatorkörpers an diesem an und bildet das Brennraum-abgewandte Ende des Isolators 3. Der Isolatorkopf ragt aus dem Gehäuse 2 heraus. Der Außendurchmesser des Isolatorkopfs liegt zwischen den Außendurchmessern von Isolatorfuß 31 und Isolatorkörper, wobei die Bereiche typischerweise über ihre Länge keinen konstanten Außendurchmesser haben, sondern der Außendurchmesser variieren kann.

Das Gehäuse 2 weist an seiner Innenseite einen Sitz 25 auf. Der Isolator liegt mit seiner Schulter bzw. Isolatorsitz 35 auf dem Gehäuse-Sitz 25 auf. Zwischen dem Isolatorsitz 35 und dem Gehäuse-Sitz 25 ist eine Innendichtung 10 angeordnet.

Zwischen der Mittelelektrode 4 und dem Anschlussbolzen 8 zur elektrische Kontaktierung der Zündkerze befindet sich im Isolator 3 ein Widerstandselement 7, auch Panat genannt. Das Widerstandselement 7 verbindet die Mittelelektrode 4 elektrisch leitend mit dem Anschlussbolzen 8. Das Widerstandselement 7 ist beispielsweise als Schichtsystem aus einem ersten Kontaktpanat 7a, einem Widerstandspanat 7b und einem zweiten Kontaktpanat 7a aufgebaut. Die Schichten des Widerstandselements unterscheiden sich durch ihre Materialzusammensetzung und dem daraus resultierenden elektrischen Widerstand. Das erste Kontaktpanat 7a und das zweite Kontaktpanat 7a können einen unterschiedlichen oder einen gleichen elektrischen Widerstand aufweisen.

An der Innenseite 23 des Gehäuses 2 sind zwei Masseelektroden 5 in jeweils einer Bohrung 52 angeordnet, so dass die Masseelektroden 5 radial von der Gehäuse-Innenseite 23 in die Bohrung entlang der Längsachse X des Gehäuses 2 hineinragen. Die Masseelektroden 5 und die Mittelelektrode 4 bilden zusammen jeweils einen Zündspalt aus. Die Bohrungen 52 erstrecken sich von der Außenseite 24 durch die Gehäusewand bis zur Innenseite 23 des Gehäuses 2.

Das Gehäuse 2 weist einen Schaft auf. An diesem Schaft sind ein Mehrkant 21, ein Schrumpfeinstich und ein Gewinde 22 ausgebildet. Das Gewinde 22 dient zum Einschrauben der Zündkerze 1 in einen Motor.

Die Bohrungen 52 in der Gehäusewand sind im Bereich des Gewindes 22 ausgebildet. Dabei kann die Bohrung 52 für die Masseelektroden 5 und damit auch die Masseelektroden 5 auf jeder beliebigen Höhe im Bereich des Gewindes 22 angeordnet sein. Je nach der Position der Masseelektroden 5 im Bereich des Gewindes 22 ragt entsprechend die Mittelelektrode 4 und mit ihr auch der Isolatorfuß 31 mehr oder weniger weit in die Vorkammer 81 hinein. Je nach gewünschten Verwendungszweck der Vorkammer-Zündkerze kann die Position der Bohrungen im Bereich des Gewindes 22 und der Masseelektroden 5 auf der Innenseite 23 des Gehäuses 2 gewählt werden.

Die Bohrungen 52 sind in jeweils einer Vertiefung 51, wie beispielsweise eine konische oder eine runde Nut, angeordnet. Dabei ist der Außendurchmesser des Gehäuses 2 in den Vertiefungen kleiner als der Kerndurchmesser des Gewindes 22.

Die Vertiefungen 51 können beispielsweise durch ein Stanzen des Gehäuses 2 bei der Herstellung der Vorkammer-Zündkerze 1 entstehen. Dabei wird nicht nur der Außendurchmesser des Gehäuses 2 im Bereich der Vertiefungen 51 reduziert, sondern auch der Innendurchmesser des Gehäuses 2 im Bereich der Vertiefungen 51, so dass innerhalb des Gehäuses ein Vorsprung 26 je Vertiefung 51 entsteht.

Am Gehäuse 2 ist auf dessen brennraumseitigen Stirnfläche eine Kappe 80 angeordnet. Das Gehäuse 2 und die Kappe 80 bilden zusammen eine Vorkammer 81 mit einem Vorkammervolumen. Die Vorkammer 81 erstreckt sich von der Kappe bis ins Gehäuse 2 hinein und innerhalb des Gehäuses 2 bis zum Gehäuse-Sitz 25, dem der Isolator 3 mit seiner Schulter 35 aufliegt. Der Zwischenraum zwischen Gehäuse 2 und Isolator 3 ist an dieser Stelle mittels einer Innendichtung 10 gasdicht abgedichtet. Die Vorkammer 81 und ihr Volumen lassen sich in eine vordere Vorkammer 81a und eine hintere Vorkammer 81b unterteilen. Der Grenze zwischen der vorderen Vorkammer 81a und hinteren Vorkammer 81b wird durch die Position der Masseelektrode bestimmt, d.h. die vordere Vorkammer 81a erstreckt sich von der Kappe bis zu einer Ebene, die auf Höhe der Masseelektrode senkrecht zur der Längsachse X des Gehäuses verläuft. Entsprechend erstreckt sich die hintere Vorkammer 81b von dieser Ebene bis zum Gehäuse-Sitz 25, auf dem der Isolator 3 und die Innendichtung 10 aufliegen. Die Ebene wird entlang der Längsachse der Masseelektroden 5 gelegt.

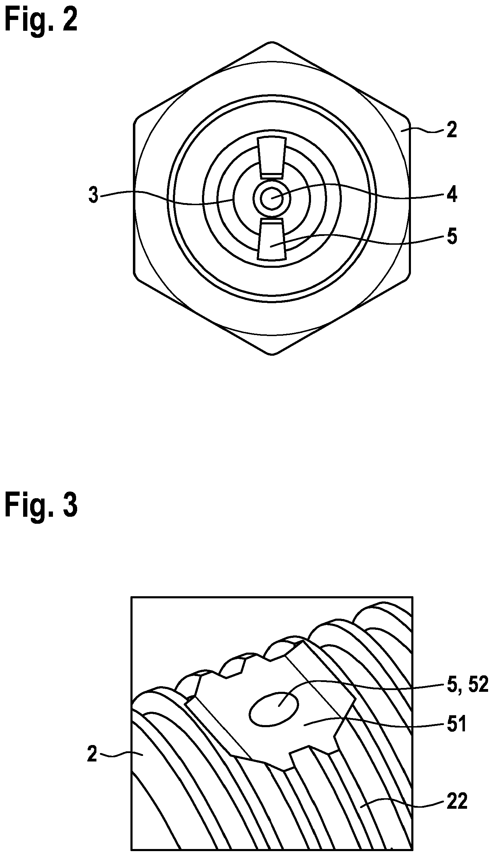

Figur 2 zeigt einen Blick in die Vorkammer entlang der Längsachse aus Richtung des Brennraums. Aus dieser Perspektive kann man die Anordnung von beispielsweise 2 Masseelektroden 5 gut sehen. Die Masseelektroden 5 haben einen Abstand von 180° zu einander. Bei einem Ausführungsbeispiel der erfindungsgemäßen Zündkerze mit 4 symmetrisch angeordneten Masseelektroden hätten die Masseelektroden einen Abstand von 90° zu einander. Bei einem anderen Ausführungsbeispiel der Erfindung mit 6 symmetrisch angeordneten Masseelektroden hätten die Masseelektroden einen Abstand von 60° zu einander

In Figur 3 ist ein Ausschnitt des Gewindebereichs 22 des Gehäuses zu sehen. Es ist deutlich die Vertiefung 51 mit der Bohrung 52 für die Masseelektrode 5 zu erkennen. Im Bereich der Vertiefung 51 hat das Gehäuse einen kleineren Durchmesser als der Kerndurchmesser des Gewindes.

## Patentansprüche

1. Vorkammer-Zündkerze (1), aufweisend
• ein Gehäuse (2) mit einer Bohrung entlang seiner Längsachse, wodurch das Gehäuse (2) eine Außenseite (24) und eine Innenseite (23) hat, und wobei das Gehäuse (2) auf seiner Außenseite (24) ein Gewinde (22) zum Einschrauben der Zündkerze in einen Zylinderkopf hat,
• eine Kappe (80), die am brennraumseitigen Ende des Gehäuses am Gehäuse (2) angeordnet ist, und die zusammen mit dem Gehäuse (2) eine Vorkammer (81) ausbildet,
• ein innerhalb des Gehäuses (2) angeordneten Isolator (3)
• eine innerhalb des Isolators (3) angeordnete Mittelelektrode (4), und
• mindestens zwei Masseelektroden (5), wobei die mindestens zwei Masseelektroden (5) und die Mittelelektrode (4) so angeordnet sind, dass jede Masseelektrode mit der Mittelelektrode einen Zündspalt ausbilden, und dass die mindestens zwei Masseelektroden (5) an der Innenseite (23) des Gehäuses (2) angeordnet ist,
**dadurch gekennzeichnet,**
**dass** das Gehäuse (2) in seiner Gehäusewand mindestens zwei Bohrungen (52) aufweist, wobei die Bohrungen (52) in einem Bereich des Gewindes (22) ausgebildet sind und in jeder der mindestens zwei Bohrungen (52) eine der mindestens zwei Masseelektroden (5) eingesteckt und befestigt ist.

2. Zündkerze (1) nach Anspruch 1, **dadurch gekennzeichnet, dass** die mindestens zwei Masseelektroden (5) symmetrisch an der Innenseite (23) des Gehäuses (2) angeordnet sind.

3. Zündkerze (1) nach Anspruch 1 oder Anspruch 2, **dadurch gekennzeichnet, dass** die Masseelektroden (5) in den Bohrungen (52) verschweißt oder verpresst sind.

4. Zündkerze (1) nach einem Anspruch 1 bis 3, **dadurch gekennzeichnet, dass** das Gehäuse (2) an seiner Außenseite (24) eine oder mehrere Vertiefungen (51) aufweist, in der / den die Bohrungen (52) ausgebildet sind.

5. Zündkerze (1) nach Anspruch 4, **dadurch gekennzeichnet, dass** der Außendurchmesser des Gehäuses (2) bei der einen oder der mehreren Vertiefungen (51) kleiner ist als ein Kerndurchmesser des Gewindes (22).

6. Zündkerze (1) nach einem Anspruch 4 oder 5, **dadurch gekennzeichnet, dass** die eine oder mehreren Vertiefungen (51) als eine runde Nut, eine konische Nut oder eine ebene Fläche im Bereich des Gewindes (22) ausgebildet sind.

7. Zündkerze nach einem der vorherigen Ansprüchen, **dadurch gekennzeichnet, dass** die Zündkerze 4 oder 6 Masseelektroden aufweist, die symmetrisch an der Innenseite des Gehäuses angeordnet sind

8. Zündkerze (1) nach einem der Ansprüche 1 bis 7, **dadurch gekennzeichnet, dass** die Vorkammer (81) eine hintere Vorkammer (81b) und eine vordere Vorkammer (81a) hat, wobei ein Volumen der hinteren Vorkammer (81b) mindestens 1/4 des gesamten Volumens der Vorkammer (81) beträgt.

## Claims

1. Pre-chamber spark plug (1), comprising
• a housing (2) having a bore along its longitudinal axis, as a result of which the housing (2) has an outer side (24) and an inner side (23), and wherein the housing (2) has, on its outer side (24), a thread (22) for screwing the spark plug into a cylinder head,
• a cap (80) which is arranged on the housing (2) at the combustion-chamber end of the housing and which forms a pre-chamber (81) together with the housing (2),
• an insulator (3) arranged within the housing (2),
• a centre electrode (4) arranged within the insulator (3), and
• at least two earth electrodes (5), wherein the at least two earth electrodes (5) and the centre electrode (4) are arranged such that each earth electrode forms an ignition gap with the centre electrode, and that the at least two earth electrodes (5) are arranged on the inner side (23) of the housing (2),
**characterized**
**in that** the housing (2) has at least two bores (52) in its housing wall, wherein the bores (52) are formed in a region of the thread (22) and one of the at least two earth electrodes (5) is inserted and fastened in each of the at least two bores (52).

2. Spark plug (1) according to Claim 1, **characterized in that** the at least two earth electrodes (5) are arranged symmetrically on the inner side (23) of the housing (2).

3. Spark plug (1) according to Claim 1 or Claim 2, **characterized in that** the earth electrodes (5) are welded or pressed in the bores (52).

4. Spark plug (1) according to one of Claims 1 to 3, **characterized in that** the housing (2) has one or more recesses (51) on its outer side (24), the bores (52) being formed in the one or more recesses.

5. Spark plug (1) according to Claim 4, **characterized in that** the outside diameter of the housing (2) at the one or more recesses (51) is less than a core diameter of the thread (22).

6. Spark plug (1) according to either of Claims 4 and 5, **characterized in that** the one or more recesses (51) is/are formed as a round groove, a conical groove or a flat surface in the region of the thread (22).

7. Spark plug according to one of the preceding claims, **characterized in that** the spark plug has 4 or 6 earth electrodes, which are arranged symmetrically on the inner side of the housing.

8. Spark plug (1) according to one of Claims 1 to 7, **characterized in that** the pre-chamber (81) has a rear pre-chamber (81b) and a front pre-chamber (81a), wherein a volume of the rear pre-chamber (81b) is at least 1/4 of the total volume of the pre-chamber (81).

## Revendications

1. Bougie d'allumage à préchambre (1), comprenant
* un boîtier (2) pourvu d'un perçage le long de son axe longitudinal, moyennant quoi le boîtier (2) possède un côté extérieur (24) et un côté intérieur (23), et le boîtier (2) comportant sur son côté extérieur (24) un filet (22) servant à visser la bougie d'allumage dans une culasse,
* un capuchon (80), qui est disposé sur le boîtier (2) à l'extrémité côté chambre de combustion du boîtier et qui, conjointement avec le boîtier (2), forme une préchambre (81),
* un isolateur (3) disposé à l'intérieur du boîtier (2),
* une électrode centrale (4) disposée à l'intérieur de l'isolateur (3) et
* au moins deux électrodes de masse (5), les au moins deux électrodes de masse (5) et l'électrode centrale (4) étant disposées de telle sorte que chaque électrode de masse forme avec l'électrode centrale une fente d'allumage, et les au moins deux électrodes de masse (5) étant disposées sur le côté intérieur (23) du boîtier (2),
**caractérisée en ce**
**que** le boîtier (2) possède au moins deux perçages (52) dans sa paroi de boîtier, les perçages (52) étant formés dans une zone du filet (22) et l'une des au moins deux électrodes de masse (5) étant insérée et fixée dans chacun des au moins deux perçages (52).

2. Bougie d'allumage (1) selon la revendication 1, **caractérisée en ce que** les au moins deux électrodes de masse (5) sont disposées symétriquement au niveau du côté intérieur (23) du boîtier (2).

3. Bougie d'allumage (1) selon la revendication 1 ou la revendication 2, **caractérisée en ce que** les électrodes de masse (5) sont soudées ou enfoncées dans les perçages (52).

4. Bougie d'allumage (1) selon l'une des revendications 1 à 3, **caractérisée en ce que** le boîtier (2) possède sur son côté extérieur (24) une ou plusieurs cavités (51) dans laquelle/lesquelles sont formés les perçages (52).

5. Bougie d'allumage (1) selon la revendication 4, **caractérisée en ce que** le diamètre extérieur du boîtier (2) au niveau de l'une ou des plusieurs cavités (51) est inférieur à un diamètre de noyau du filet (22).

6. Bougie d'allumage (1) selon l'une des revendications 4 ou 5, **caractérisée en ce que** l'une ou les plusieurs cavités (51) sont réalisées sous la forme d'une rainure ronde, d'une rainure conique ou d'une surface plane dans la zone du filet (22).

7. Bougie d'allumage (1) selon l'une des revendications précédentes, **caractérisée en ce que** la bougie d'allumage possède 4 ou 6 électrodes de masse qui sont disposées symétriquement au niveau du côté intérieur du boîtier.

8. Bougie d'allumage (1) selon l'une des revendications 1 à 7, **caractérisée en ce que** la préchambre (81) comporte une préchambre arrière (81b) et une préchambre avant (81a), un volume de la préchambre arrière (81b) étant égal à au moins 1/4 du volume total de la préchambre (81).
